# EUROPEAN PATENT SPECIFICATION

(11) **EP 0 638 982 B1**
(45) Date of publication and mention of the grant of the patent: **25.02.1998**
(21) Application number: 94304270.5
(22) Date of filing: 14.06.1994
(51) Int. Cl.: H02K 11/00, H02K 5/22

(54) **Miniature motor**
Miniaturmotor
Moteur miniature

(30) Priority: 15.06.1993 JP 143215/93; 11.04.1994 JP 71860/94
(43) Date of publication of application: 15.02.1995
(73) Proprietor: MABUCHI MOTOR KABUSHIKI KAISHA, Matsudo-shi, Chiba-ken (JP)
(72) Inventor: Yuhi, Toshia c/o Mabuchi Motor K. K., Inba-gun, Chiba-ken (JP); Kato, Masahiko, c/o Mabuchi Motor K. K., Inba-gun, Chiba-ken (JP); Ohtake, Takahiro, c/o Mabuchi Motor K. K., Inba-gun, Chiba-ken (JP); Someya, Ryouichi, c/o Mabuchi Motor K. K., Inba-gun, Chiba-ken (JP)
(74) Representative: Hitchcock, Esmond Antony

(56) References cited:
- EP-A- 0 509 683
- EP-A- 0 511 776
- DE-A- 3 840 273
- DE-U- 9 104 028

## Description

This invention relates to a miniature motor of the type commonly used in audio equipment, precision instruments and automotive electrical equipment.

As miniature motors are low powered, overloading (or stalling in extreme cases) may occur if the rotor is impeded by rust or the entry of foreign matter into the motor case for example; or if its operating limit is reached. This leads to overheating or burning of the windings of the armature. This problem may be addressed by feeding the power to the armature via a positive temperature coefficient resistor. In known miniature motors, the resistor is commonly held between lugs provided on an input terminal and a connecting piece. A motor of this type is disclosed in Japanese Published Unexamined Utility Model Application No. Hei-2(1990)-41664. However as the resistor is retained only by the frictional forces exerted by the lugs, it may be dislodged by vibration or other external forces. Increasing the holding force of the lugs increases the pushing force required when inserting the resistor during motor assembly. This may lead to damage of the electrodes on the surface of the resistor and possibly loss of the functions of the resistor. Furthermore, the ability to control the holding forces is necessarily limited by the particularly small size of the components involved.

Another disadvantage of a motor having the above construction is that the lugs are configured to contact each other if - the resistor is not present. Therefore, the accidental omission of the resistor may be undetected during assembly and inspection, because the motor's electrical circuit is nevertheless continuous.

Another prior art motor fed through a PCT resistor is disclosed in EP-A-0 511 776.

The present invention is directed at an electric motor construction in which a positive temperature resistor may be reliably held within the motor case without the risk of damage during assembly. Also, the absence of the resistor may be readily detected.

Such a motor comprises a metallic tubular case closed at one end with a permanent magnet fitted to the inner surface thereof; a case cap closing the open end of the case; a rotor comprising an armature and a commutator, being rotatably supported by bearings provided on the closed end of the case and on the case cap; brushes supported on the case cap for making sliding contact with the commutator; a pair of input terminals electrically connected to the brushes and a retaining member for connecting a brush to one of the input terminals via a positive temperature coefficient resistor held between the input terminal and the retaining member. According to the invention, the retaining member has a leg disposed in the case cap, which leg comprises a projection formed by lancing and raising a portion of the leg, and at least one retaining piece formed by plastically deforming another portion of the leg, both the projection and retaining piece being directed towards the input terminal but without the retaining member making any contact therewith, and being adapted to engage and hold a positive temperature coefficient resistor thereagainst. The end of the retaining member leg comprises at least two prongs, with the projection formed on one prong and the retaining piece formed by plastically deforming another prong. The movement of a retained resistor is restricted in the extracting direction by the projection cutting into the surface of the resistor.

In one embodiment of the invention, the end of the leg of the retaining member may be plastically deformed to engage and hold a resistor against the input terminal. In preferred embodiments, a pushing piece extends from the retaining member in a direction opposite to the leg, and is adapted to resiliently engage a retained resistor. The retaining member may be substantially U-shaped.

A projection may also be provided on the input terminal and directed towards the retaining member. In a preferred arrangement, the input terminals are substantially L-shaped and of which the shorter legs act as stoppers against the inner end of the case cap. In addition, a lanced and raised lug may be formed from an intermediate portion of each terminal and plastically deformed against an outer end surface of the case cap. The input terminal projection is preferably disposed between the stopper and the lug on one of the pair of terminals in this embodiment. Alternatively, each input terminal may have a substantially rectangular shape, with a wider section forming a stopper relative to the case cap. Two lanced and raised lugs may be formed from intermediate portions thereof, of which one comprises the input terminal projection and the other engages the body of the case cap.

In another preferred embodiment, a projection is provided on an inner wall of a hole provided on the case cap for receiving the positive temperature coefficient resistor, and contacts the resistor on the same side as the input terminal.

Known motor constructions and some embodiments of the invention will now be described by way of example and with reference to the accompanying drawings wherein:
Figure 1 is a longitudinal partly sectional view of a conventional miniature motor;
Figure 2 is an exploded perspective view of an end cover showing a connector arrangement incorporating a positive temperature coefficient resistor;
Figures 3 and 4 are enlarged cross-sectional views showing the connector arrangement of Figure 2 installed in the end cover;
Figure 5 is a longitudinal partly sectional view showing another conventional miniature motor;
Figure 6 is an enlarged cross-sectional view of the end cover of Figure 5;
Figures 7 and 8 are a plan view and a bottom view, respectively, of the case cap according to one embodiment of the invention;
Figure 9 is a partly cross-sectional side view along line C-C of Figure 7;
Figures 10A and 10B are cross-sectional views along lines D-D and E-E, respectively, of Figure 7;
Figures 11A, 11B and 11C are a longitudinal sectional view, a side view and a bottom view, respectively, of the input terminal 81 shown in Figures 7, 8 and 10A;
Figures 12A and 12B are a longitudinal sectional view and a side view, respectively, of the input terminal 82 shown in Figures 7, 8 and 10B;
Figures 13A and 13B are a side view and a front view of the retaining member 48 shown in Figures 8 and 10B.
Figures 14 and 15 are views from direction F in Figure 13A and direction G in Figure 13B, respectively;
Figures 16A and 16B are a side view and a front view of the retaining member 48 according to a second embodiment of the invention;
Figures 17 and 18 are views from direction H in Figure 16A and direction J in Figure 16B, respectively;
Figures 19A and 19B are a longitudinal sectional view and a side view of an input terminal according to the second embodiment of the invention;
Figure 20A is a cross-sectional view of the case cap showing the input terminal 83 and the retaining member 48 installed according to the second embodiment of the invention;
Figure 20B is a partly cross-sectional view along line K-K of Figure 20A;
Figures 21A and 21B are a side view and a front view, respectively, of the retaining member 48 according to a third embodiment of the invention;
Figures 22 and 23 are views from direction L in Figure 21A and direction M in Figure 21B, respectively;
Figure 24 is a cross-sectional view of the case cap showing the retaining member 48 installed according to the third embodiment of the invention;
Figure 25 is an enlarged bottom view of a case cap according to a fourth embodiment of the invention;
Figure 26 is a bottom view illustrating a case cap according to a fifth embodiment of the invention;
Figure 27 is a partly cross-sectional view of the case cap of Figure 26 along line P-P;
Figure 28 is an enlarged plan view of the retaining member 48 shown in Figures 26 and 27;
Figures 29 and 30 are views from direction Q and direction R in Figure 28, respectively;
Figures 31A and 31B are a longitudinal sectional view and a left-hand side view of the input terminal 83 shown in Figures 26 and 27;
Figure 32 is an enlarged view from direction S in Figure 27.

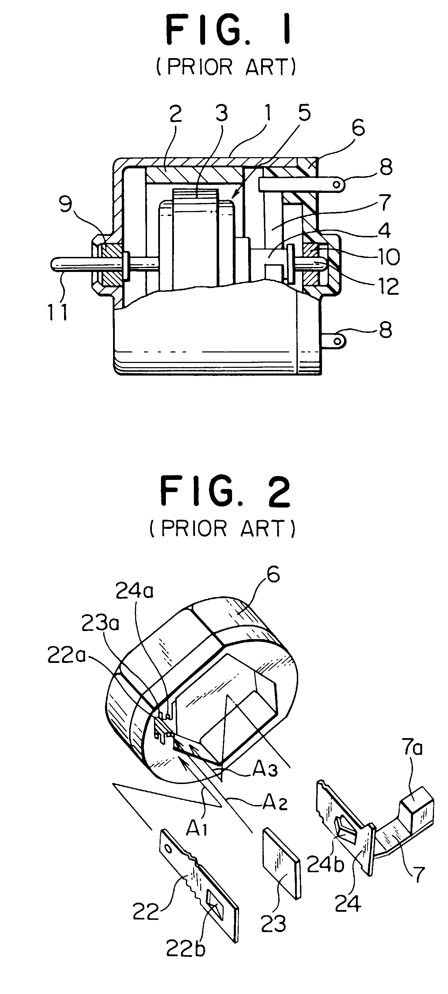

In the Figures, like parts are indicated by like reference numerals. The motor shown in Figure 1 has a tubular case 1 made of a metallic material, such as mild steel, which is closed at one end. A permanent magnet 2 of arc-segment shape, for example, is fixedly fitted to the inner surface thereof. Rotor 5 comprises a commutator 4, and an armature 3 facing the permanent magnet 2.

A case cap 6 made of an insulating material, such as a resin material, is fitted to an open end of the case 1. A brush 7 is provided on the case cap 6, and has a contact shoe at the free end thereof for making sliding contact with the commutator 4. Also inside the case cap is an input terminal 8 electrically connected to the brush 7. Bearings 9 and 10 are fixedly fitted to the bottom of the case 1 and the central part of the case cap 6, respectively, for supporting the shafts 11 and 12 of the rotor 5.

Thus, as power is fed to the armature 3, the motor operates in a known manner to drive external equipment (not shown).

Figures 2 to 4 show a known motor incorporating a positive temperature coefficient resistor 23. The resistor is formed into a quadrilateral strip shape, for example, with both sides thereof coated with electrodes (not shown). An input terminal 22 is fixedly fitted to the case cap 6. A brush base 24 has a power feeding brush piece 7a provided at the free end thereof, connected to the brush 7 integrally or in such a manner as to ensure electrical continuity.

Adjoining grooves 22a, 23a and 24a are located on the case cap 6 in a substantially parallel orientation. Each groove corresponds to the cross-sectional shape and dimensions of the input terminal 22, the positive temperature coefficient resistor 23 and the brush base 24, respectively. Groove 22a passes through the case cap 6, whilst the other grooves 23a and 24a only extend partially through the case cap from its inside end face.

Lug pieces 22b and 24b extend from the input terminal 22 and the brush base 24 towards the positive temperature coefficient resistor 23. The input terminal 22, the positive temperature coefficient resistor 23 and the brush base 24 are fixedly fitted by insertion into the grooves 22a, 23a and 24a in the directions indicated by arrows A₁, A₂, and A₃, respectively. The other input terminal and brush base are also fixedly fitted in the same manner although this is not shown in the Figures.

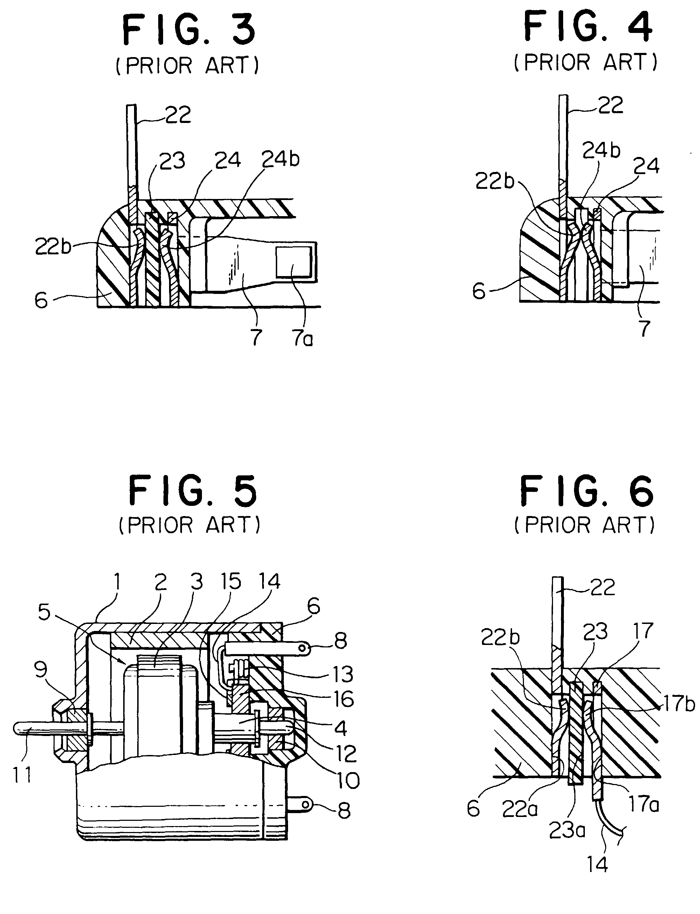

The positive temperature coefficient resistor 23 is held by the lug pieces 22b and 24b provided on the input terminal 22 and the brush base 24, as shown in Figure 3, and functions in a known manner. Depending on the application for which the motor is required, it may not be necessary to incorporate such overheating prevention measures. If this is the case, the resilient lug pieces 22b and 24b, which have been preloaded to a considerable degree, are brought into direct contact with each other, thereby ensuring electrical continuity without the presence of the positive temperature coefficient resistor 23, as shown in Figure 4.

Figure 5 is a sectional view of another conventional miniature motor. A brush 16 is formed into a hollow prism shape with a square or rectangular cross-section, for example, and is slidably fitted to a brush holder 15 provided on the inside end face of the case cap 6. The brush 16 makes sliding contact with the commutator 4, and is forced against it by a spring 13. Input terminal 8 passed through and is fixedly fitted to the case cap 6, and is electrically connected to the brush 16 via a pig-tail wire 14.

The motor shown in Figure 5 also operates in a known manner to drive the output shaft 11. Again a positive temperature coefficient resistor may be adopted as a means of preventing overheating.

In Figure 6, a connecting piece 17 having a lug piece 17b is provided at a position facing the positive temperature coefficient resistor 23, and is fixedly fitted into a groove 17a provided on the case cap 6. The lower end of the connecting piece 17 is electrically connected to the brush 16 via the pig-tail wire 14. The positive temperature coefficient resistor 23 is held by lug pieces 22b and 17b provided on the input terminal 22 and the connecting piece 17, and functions in a known manner to prevent overheating.

In the motor construction described above, the positive temperature coefficient resistor 23 may fall from the case cap 6 during use as a result of vibration or other external forces. This is because the holding force is only provided by the frictional forces exerted on the resistor by the lug pieces.

To increase the holding forces, the resiliency or mechanical resistance applied by the lug pieces 22b, 24b and 17b can be increased, but this would increase the pushing force required to insert the positive temperature coefficient resistor 23. This makes insertion a more troublesome process and may cause damage to the electrodes provided on the surface of the resistor 23, possibly leading to failure of the resistor 23 in extreme cases.

Although the input terminal 22, the brush base 24 and the connecting piece 17 are generally about 0.8 mm thick, for example, the amount of resilience imparted to the lug pieces 22b, 24b and 17b is limited due to the small size of these components. This makes it extremely difficult to set the proper holding force for the positive temperature coefficient resistor 23.

If the positive temperature coefficient resistor 23 is omitted from a motor of the type described above, the lug pieces 22b and 24b or 17b are brought into direct contact with each other. If a resistor is required, but is accidentally omitted during assembly, this may be overlooked in the final inspection because the lug pieces 22b and 24b or 17b maintain electrical continuity. Thus, the miniature motor may be deemed to be acceptable even though the resistor is not present.

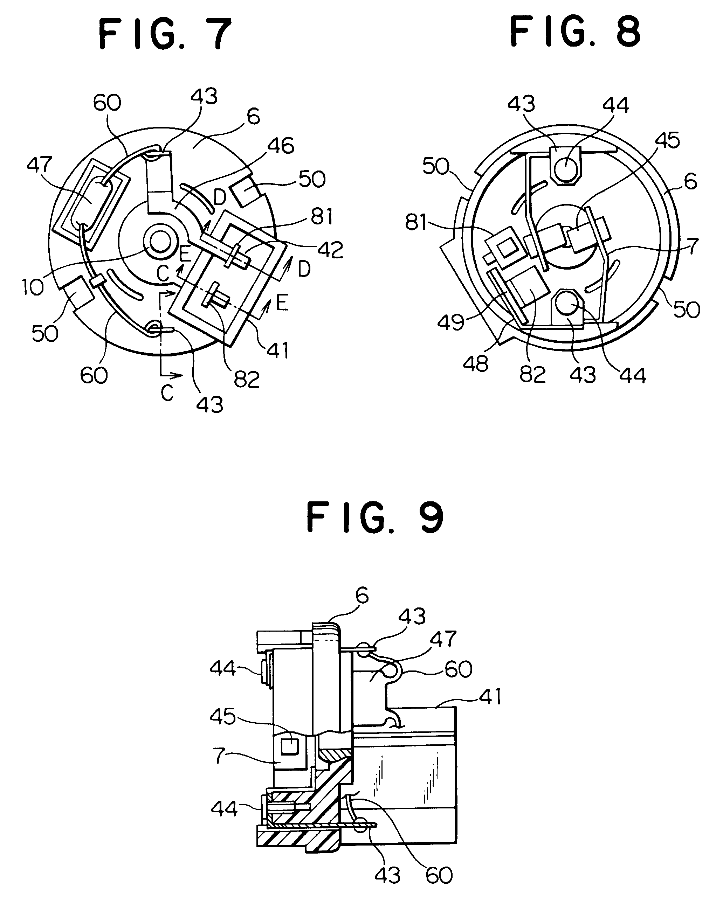

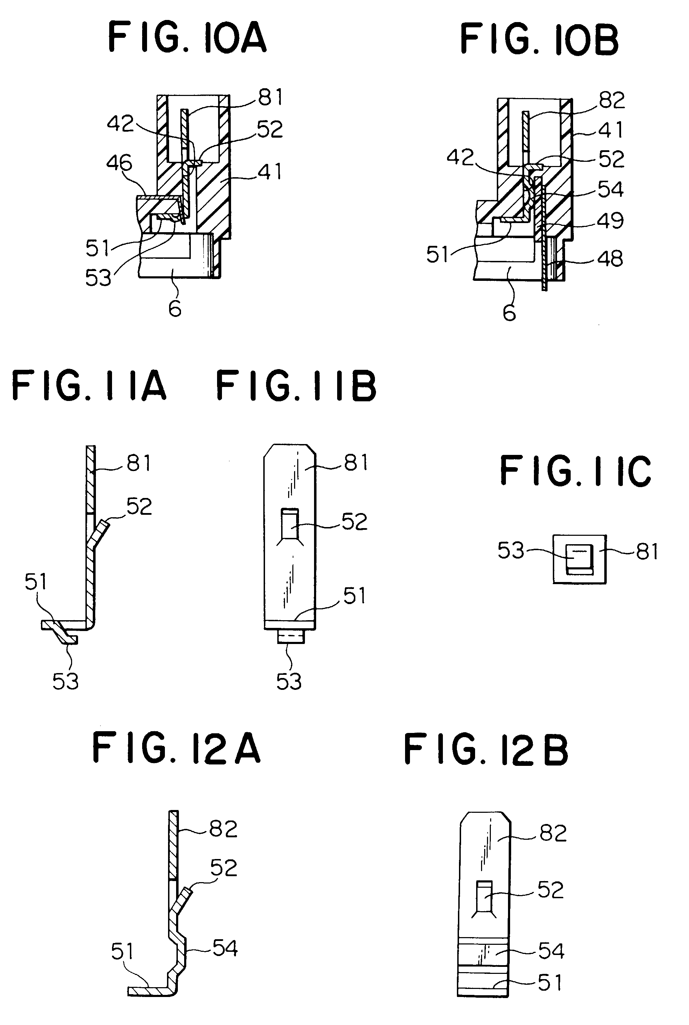

In the embodiment of the invention shown in Figures 7 to 10B, a substantially cup-shaped case cap 6 is made of an insulating material, such as a resin. A hollow tubular connecting member 41 is integrally provided on the outer end face thereof. A pair of input terminals 81 and 82 are formed in a manner described below, and inserted into and fixed fitted to a hole 42 of T-shaped cross-section which passes through the case cap 6. The free ends of input terminals 81 and 82 protrude into the connecting member 41.

A pair of L-shaped connecting terminals 43 are provided on the case cap 6 via mounting members 44 so that the connecting ends thereof protrude from the outer end face of the case cap 6. Inside the case cap 6, each connecting terminal 43 is connected to the substantially L-shaped brush 7 having the sliding contact shoe 45 at the free end thereof. One connecting terminal 43 is electrically connected to the input terminal 81 via an electrically conductive member 46. A capacitor 47 is electrically connected across the connecting terminals 43 via a lead wire 60 to reduce electrical noise generated from the motor.

A retaining member 48 is formed from an electrically conductive material into a substantially planar U-shape, as described below, with a first leg making contact with the connecting terminal 43 and the second leg contacting a positive temperature coefficient resistor 49. The second leg holds the resistor, formed into a substantially quadrilateral shape, for example, inside the case cap 6 in conjunction with the input terminal 82.

The case 1 and the case cap 6 may be assembled together by fitting the case cap 6 to an open end of the case 1, and bending an engaging piece (not shown) provided on the open end of the case 1 toward an engaging part 50 (see Figure 7) provided on the case cap 6.

Figures 11A to 11C illustrate the input terminal 81 shown in Figures 7, 8 and 10A, whilst Figures 12A and 12B illustrate the input terminal 82 shown in Figures 7, 8 and 10B. The input terminal 81 is made of electrically conductive material and a stopper 51 is provided at one end by forming the terminal with a substantially L-shaped longitudinal cross-section. A lanced and raised lug 52 is located at the central part of the input terminal 81, and a further lanced and raised part 53 is formed on the stopper 51.

The input terminal 82 is also made of an electrically conductive material and has a substantially L-shaped cross-section. A projection 54 is located between the stopper 51 and the lanced and raised lug 52 and protrudes from the same side of the terminal as the lug 52. The input terminals 81 and 82 described above are preferably manufactured by press forming means.

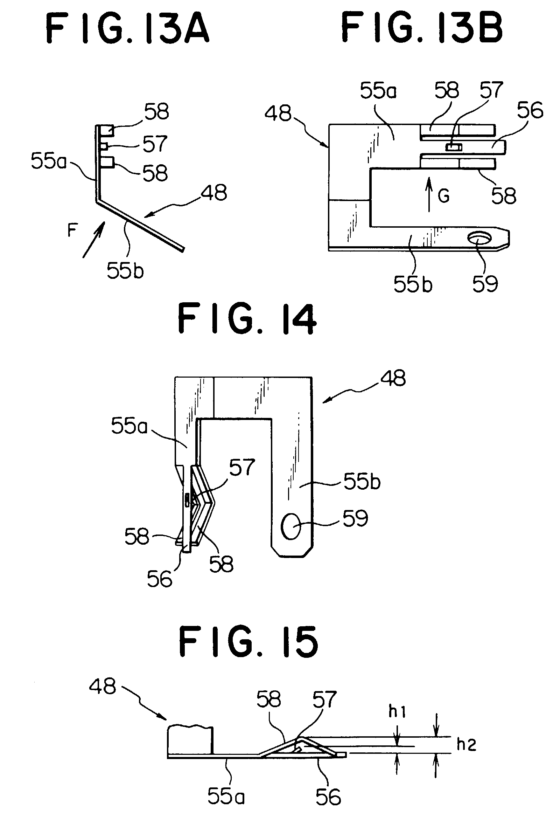

Figures 13A to 15 illustrate the retaining member 48 shown in Figures 8 and 10B. It is made of an electrically conductive material and is substantially U-shaped with legs 55a and 55b. The middle portion of the member 48 is plastically deformed to form an angle, preferably about 120°, as illustrated in Figure 13A.

The tip of the leg 55a may be formed into a fork shape, or a trifurcated piece, for example, with the central prong 56 having a lanced and raised lug 57, and the two side prongs 58 being bent towards the same side as the lug 57 to form protruding retaining parts. A hole 59 is provided at the tip of the other leg 55b to improve the engaging action of the retaining member 48 with the case cap 6 (see Figures 7 to 10B) as described below.

The protruded height h₂ of the two side prongs 58 from the central prong 56 should preferably be greater than the height h₁ of the lanced and raised lug 57.

The method of installing the input terminals 81 and 82 and the retaining member 48 on the case cap 6 will now be described. Firstly, the input terminals 81 and 82 are inserted into the hole 42 through the inner end of the case cap 6. The T-shaped cross-section of the hole 42 allows the lanced and raised lug 52 to readily pass through the case cap 6.

The input terminals 81 and 82 are located in position by the stoppers 51 abutting against the end face of the case cap 6, and are secured in position by bending the lanced and raised lugs 52 substantially perpendicular to the surface of the input terminals 81 and 82. Thus, the input terminals 81 and 82 are resistant to longitudinal extracting forces. A jig may be used to bend the lanced and raised lugs 52 without interfering with the connecting member 41, because the bending operation is performed longitudinally with respect to the input terminals 81 and 82.

Once the input terminals 81 and 82 have been fixedly fitted to the case cap 6, the lanced and raised part 53 of the input terminal 81 is bent back to crimp an end of the electrically conductive member 46 and form an electrical connection therewith, as shown in Figure 10A. The retaining member 48 is then fixedly fitted to the case cap 6 by insertion into a predetermined position, together with the mounting member 44, connecting terminal 43 and the brush 7, as shown in Figure 8. These four members are thereby positively connected, both mechanically and electrically.

A small gap is defined between the leg 55a of the retaining member 48 and the input terminal 82 and therefore the positive temperature coefficient resistor 49 may be easily inserted between them, as shown in Figures 8 and 10B. As the resistor 49 is inserted, the prongs 58 and the lanced and raised lug 57 are elastically deformed from a bent or raised position towards the plane of the leg 55a. Thus, the positive temperature coefficient resistor 49 can be positively held between the retaining member 48 and the projection 54 of the input terminal 82. Although the positive temperature coefficient resistor 49 may be subject to a creep phenomenon when the area of the resistor held by the projection 54 is reduced due to tripping, both the prongs 58 and the lanced and raised lug 57 are able to adapt to changes in the thickness of the resistor 49. This is because of their elastically deformed state which serves to maintain the contact and the holding force. The contact resistance between both may also be kept constant.

If external forces act to pull the positive temperature coefficient resistor 49 from its position, the lanced and raised lug 57 cuts into the surface of the electrode of the positive temperature coefficient resistor 49. This increases the extracting resistance and improves the reliability of the motor.

Preferably, if the size of a gap between the surface of the projection 54 of the input terminal 82 and the retaining member 48 prior to insertion of the positive temperature coefficient resistor 49 is defined as g, and the thickness of the positive temperature coefficient resistor 49 is t, the relationship between g and t should be such that g < t. The datum from which the gap size g may be measured is the upper end of the prongs 58 and the lanced and raised lug 57 in Figure 15.

After the components are assembled as described above, the capacitor 47 is connected by soldering, for example, to the connecting terminals 43 via the lead wires 60, as shown in Figures 7 and 9. Preferably, the end of the electrically conductive member 46 is also soldered to the connecting terminal 43, together with the lead wire 60, to maintain the electrical connection.

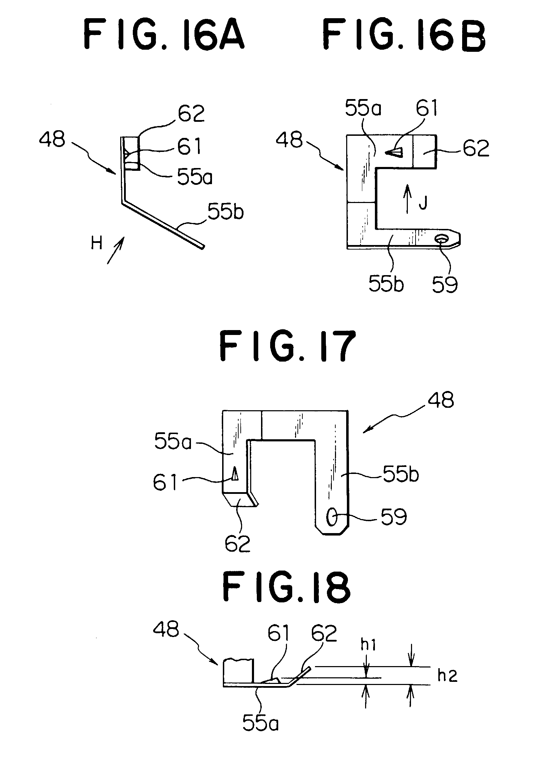

Figures 16a to 18 show a substantially U-shaped retaining member 48, according to the second embodiment of the invention. It is made of an electrically conductive, elastic metallic material similar to that shown in Figures 13A to 15, with legs 55a and 55b disposed at an angle of approximately 120°, for example, as illustrated in Figure 16A.

The leg 55a has a lanced and raised part 61 located on a flat portion near the tip 62, which is bent toward the same side as the part 61 to form a retaining part. The height h₂ of the top edge of the tip 62 from the leg 55a should preferably be made greater than the height h₁ of the top edge of the lanced and raised part 61, as shown in Figure 18.

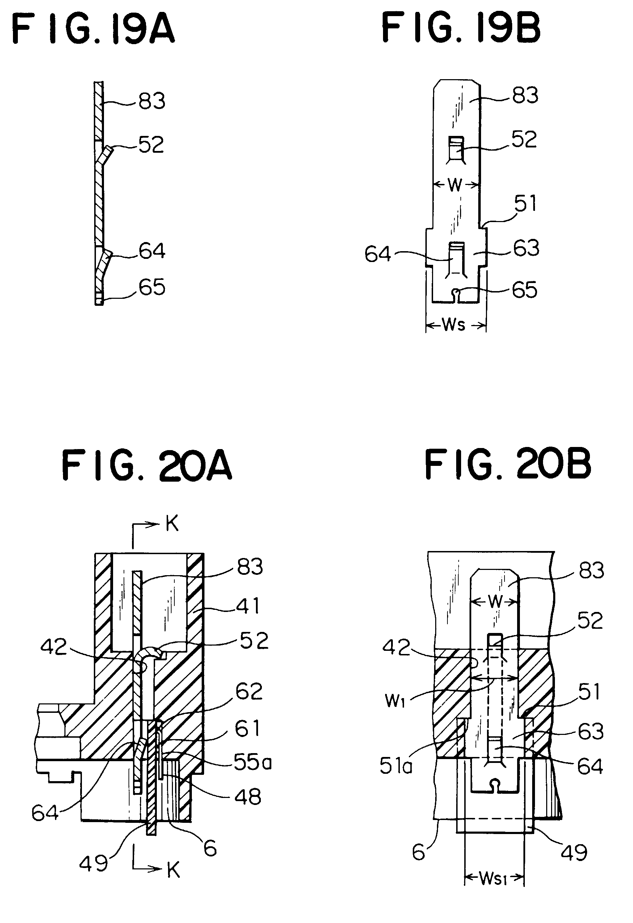

The input terminal 83, according to a second embodiment of this invention, is illustrated in Figures 19A and 19B. It is formed of an electrically conductive material similar to that of the terminals shown in Figures 11A to 12B. A press-fit part 63 having a width Wₛ larger than the width W of the intermediate portion is provided towards one end, with a stopper 51 at the upper shoulder thereof.

A lanced and raised lug 64 protrudes to the same side as the lanced and raised lug 52. The slit 65 facilitates the connection of a capacitor or any other component to the input terminal 83.

The aforementioned input terminal 83 is preferably manufactured by press forming means. This form of terminal may be used to provide both input terminals on the motor if the case cap 6 is suitably configured, although the lanced and raised lug 64 is only required on one of the pair. Therefore the number of different components in the motor is reduced.

In Figures 20A and 20B, the through hole 42 is formed into a T-shaped cross-section, as described above in relation to Figures 10A and 10B. Its upper portion has a width W₁ and the lower portion has a width Wₛ₁. If the width of the intermediate part of the input terminal 83 is W, as indicated in Figure 19B, and the width of the press-fit part 63 is Wₛ, the hole 42 should be configured such that W₁ ≥ W, and Wₛ₁ ≤ Wₛ. The depth to which the hole 42 has a width Wₛ₁ should correspond with the longitudinal size of the press-fit part 63.

During the assembly process, the input terminal 83 is inserted into the through hole 42 through the inner end of the case cap 6. The T-shaped cross-section of the hole 42 allows the lanced and raised lug 52 of the input terminal 83 to readily pass through the case cap 6.

The longitudinal position of the input terminal 83 is maintained by press fitting the press-fit part 63 of the input terminal 83 into the case cap 6, bringing the stopper 51 against a boundary part 51a. Then,the input terminal 83 may be fixedly fitted to the case cap 6 by bending the lanced and raised lug 52 almost perpendicular to the surface of the input terminal 83, as described above in relation to Figures 10A and 10B. The other input terminal 83 may be electrically connected to the electrically conductive member 46, as shown in Figures 7 and 10A, by crimping an end of the electrically conductive member 46.

The retaining member 48 illustrated in Figures 16A to 18 is fixedly fitted to the case cap 6, as shown in Figure 20A, in a similar manner to the retaining member 48 in the first embodiment of this invention. The positive temperature coefficient resistor 49 may be easily inserted between the retaining member 48 and the input terminal 83 owing to the gap provided between the leg 55a of the retaining member 48 and the input terminal 83.

Upon insertion of the positive temperature coefficient resistor 49 in the aforementioned manner, the bent or raised tip 62 is elastically deformed substantially into the plane of the leg 55a, as shown in Figure 20A. The edge of the tip 62 therefore comes into contact with or forces onto the surface of the positive temperature coefficient resistor 49. The lanced and raised projection 61 provided on the leg 55a cuts into the surface of the positive temperature coefficient resistor 49.

Thus, the positive temperature coefficient resistor 49 can be positively held between the input terminal 83 and the retaining member 48. Even if external pulling forces are exerted onto the positive temperature coefficient resistor 49, the extracting resistance can be increased and reliability can be improved, because the lanced and raised projection 61 on the leg 55a and the lanced and raised lug 64 provided on the input terminal 83 cut into the surface of the resistor 49.

Preferably, if the gap between the lanced and raised lug 64 of the input terminal 83, and the lanced and raised projection 61 of the retaining member 48 and the edge of the tip 62 is g prior to insertion of the resistor 49, and the thickness of the resistor is t, then the relationship between g and t should be g < t.

The thickness of the part of the resistor being held may be reduced due to tripping, as described above. In this embodiment, however, the resistor 49 is held not only by the lanced and raised projection 61 and the lanced and raised lug 64, but also by the tip 62. Elastic deformation of the tip 62 causes its edge to come into contact with, or force onto the surface of the resistor 49. Thus, the resistor 49 can be held positively without changing the holding force of the retaining member 48.

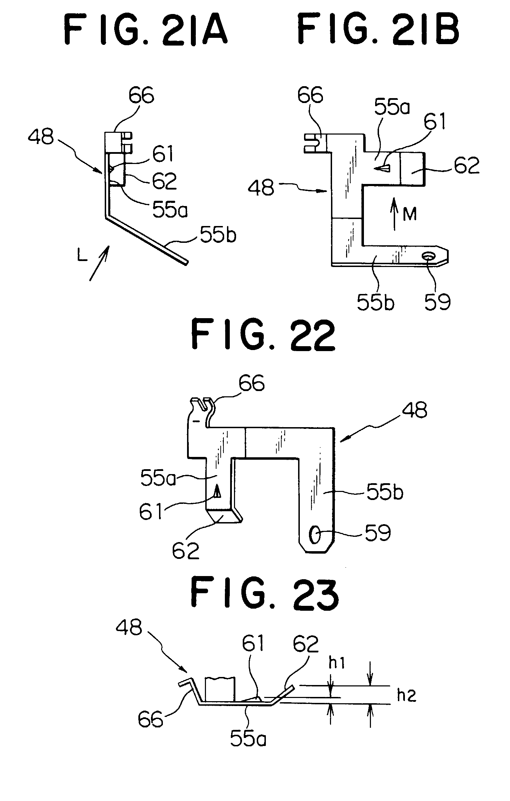

Figures 21A to 23 illustrate a retaining member 48 according to the third embodiment of the invention. The pushing piece 66 extends from the opposite side of the retaining member 48 to the leg 55a, but its substantially L-shaped bent portion protrudes from the plane of the leg 55a to the same side as the lanced and raised projection 61. The other features of its construction are the same as the retaining member 48 shown in Figures 16a to 18, described above.

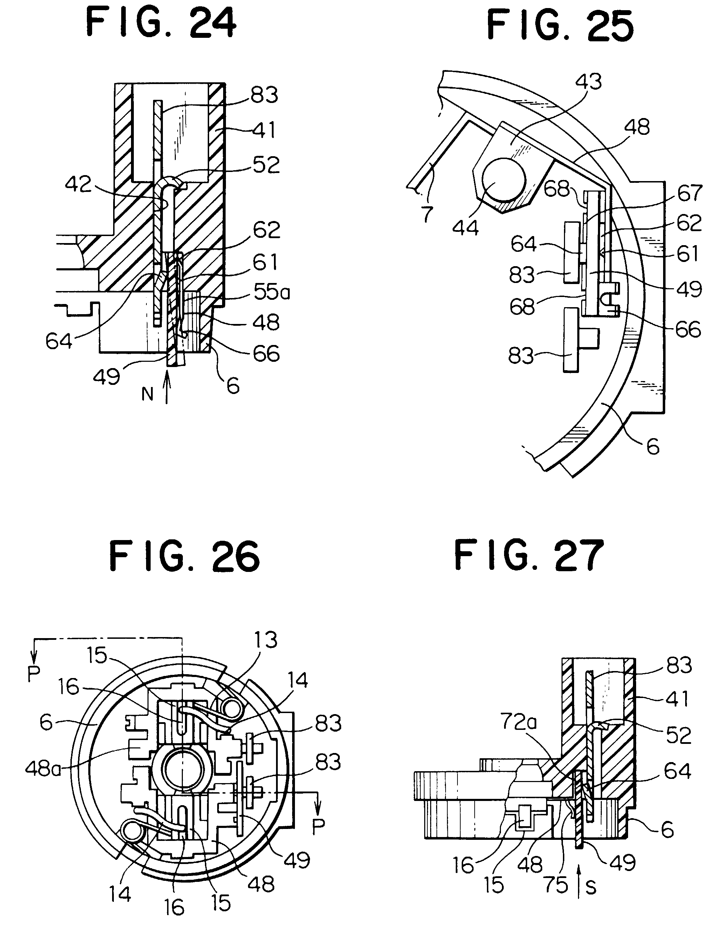

In Figure 24, the input terminal 83 is inserted into the hole 42 through the inner end of the case cap 6, and fixedly fitted by bending the lanced and raised lug 52, similarly to the embodiment shown in Figures 20A and 20B. The retaining member 48 of Figures 21A to 23 is fixedly fitted to the case cap 6. Again, a gap is provided between the leg 55a of the retaining member 48 and the input terminal 83, as in the first and second embodiments. The positive temperature coefficient resistor 49 may then be readily inserted therebetween.

The lanced and raised projection 61 cuts into the surface of the positive temperature coefficient resistor 49, and the tip 62 comes into elastic contact with the surface of the resistor 49, positively holding it in place.

The positive temperature coefficient resistor 49 may be displaced due to creep, as shown by the dashed lines in Figure 24.

As described above, the thickness of the held part of the resistor 49 may be reduced due to tripping. In this embodiment, however, the pushing piece 66 provided integrally with the retaining member 48 prevents the positive temperature coefficient resistor 49 from being displaced due to stress relieving or creep. It positively holds the resistor 49 at a predetermined position by elastically pushing against its surface. Thus, electrical contact can be maintained between the resistor 49, the input terminal 83 and the retaining member 48.

Figure 25 illustrates a portion of the case cap 6 according to a fourth embodiment of this invention. A substantially rectangular hole 67 receives the positive temperature coefficient resistor 49. Projections 68 are provided on the inside wall of the hole 67 on the same side as the input terminal 83. They are located in such a manner as to contact the surface of the positive temperature coefficient resistor 49 on both sides of the input terminal 83 and to hold the resistor against the lug 64. The projected height of the projection 68 is made slightly smaller than the projected height of the lanced and raised lug 64 of the input terminal 83.

Thus, when the resistor 49 is inserted into the hole 67, it is held by the input terminal 83 and the retaining member 48, and, in addition, one surface of the resistor 49 comes in contact with the projections 68. The resistor is thereby prevented from rotating around the lanced and raised lug 64, even when pushed by the lanced and raised projection 61, the tip 62 and the pushing piece 66 of the retaining member 48. A projection 68 may be provided on the side of the pushing piece 66 only.

Figure 26 illustrates the case cap according to a fifth embodiment of the invention. The retaining member 48 is made of an electrically conductive material, and holds the positive temperature coefficient resistor 49, in conjunction with one input terminal 83. Electrically conductive member 48a is formed into the same shape as the retaining member 48 and is connected to the other input terminal 83. The retaining member 48 and the connecting member 48a are electrically connected with a respective brush 16 via pig-tail wires 14.

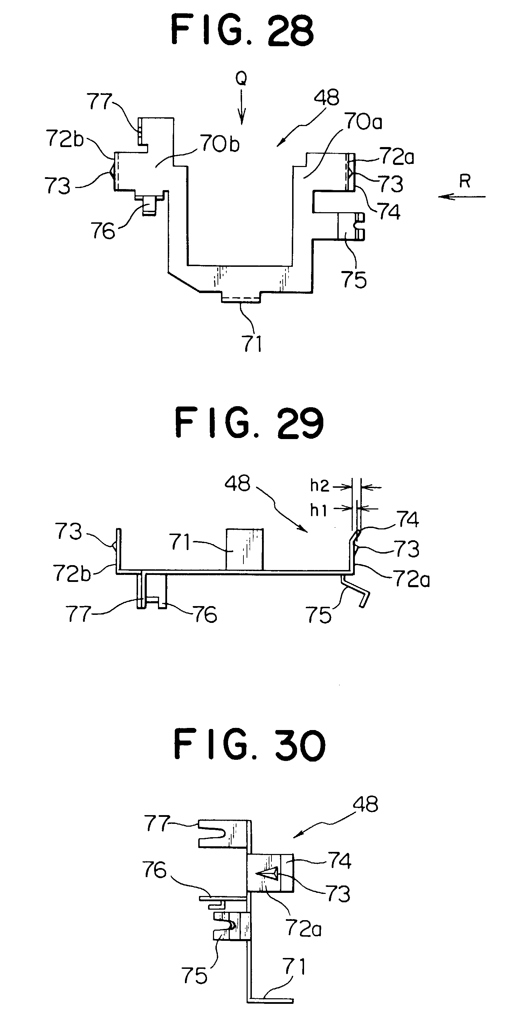

Figures 28 to 30 show the retaining member 48 of Figures 26 and 27. The member 48 is substantially U-shaped, having ends 70a and 70b which extend outwards. The end 70a extends to a lesser degree than end 70b in order to allow space for the positive temperature coefficient resistor 49, as shown in Figures 26 and 27.

A fixed leg 71 is provided on the intermediate part of the retaining member 48, and a leg 72a and a fixed leg 72b are provided on the open ends 70a and 70b by bending the corresponding parts substantially perpendicular to the plane of the retaining member 48, as illustrated in Figure 29. Lanced and raised projections 73 are provided on the leg 72a and the fixed leg 72b and protrude outward. A retaining part is formed by bending the tip 74 of the leg 72a to the same side as the lanced and raised projection 73. As indicated in Figure 29, the height h₂ of the tip edge of the tip 74 from the leg 72a should preferably be made larger than the height h₁ of the lanced and raised projection 73 from the leg 72a.

In addition, a pushing piece 75 is provided near the open end 70a, which extends out of the plane of the retaining member 48 in the opposite direction to the leg 72a. A substantially L-shaped portion of the pushing piece 75 protrudes to the same side as the lanced and raised projection 73, as shown in Figure 29. Terminals 76 and 77 are provided on the end 70b by bending the corresponding parts to the same side of the plane of the retaining member as the pushing piece 75, as shown in Figures 29 and 30. A pig-tail wire 14, a capacitor or other components may be connected to the terminals.

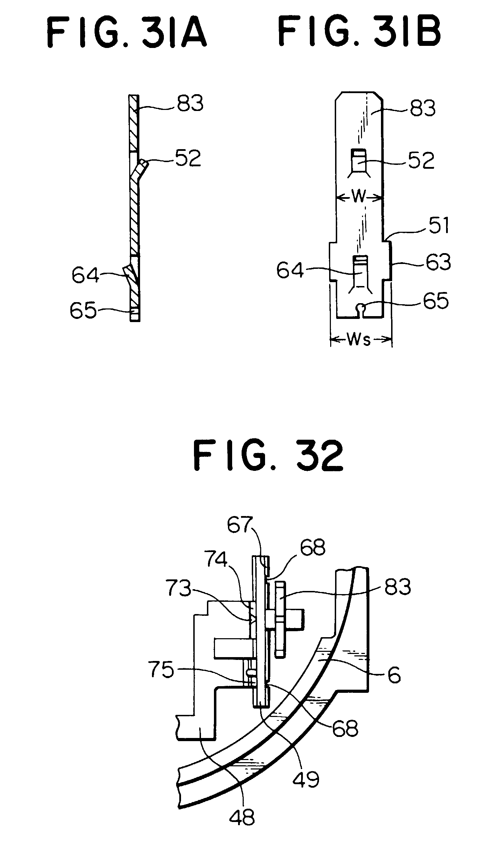

The input terminals 83 shown in Figures 31A and 31B are the same as those illustrated in Figures 19A and 19B, except that the lanced and raised lugs 52 and 64 protrude from opposite sides of the terminals.

Once the retaining member 48 shown in Figures 28 to 30 and the input terminal 83 shown in Figures 31A and 31B have been installed in the case cap 6, as shown in Figures 26 and 27, the positive temperature coefficient resistor 49 may be inserted and positively held in the same manner as in the fourth embodiment described above. Although the arrangement of the leg 72a and the pushing piece 75, the resistor 49, and the lanced and raised lug 64 of the input terminal 83, as shown in Figure 27, is the reverse of that in the fourth embodiment shown in Figure 24, this embodiment achieves the same effects and the resistor 49 is securely held.

Similarly to the embodiment shown in Figure 25, the configuration shown in Figure 32 has projections 68 on the input-terminal 83 side of the hole 67 housing the positive temperature coefficient resistor 49. They again serve to prevent unwanted rotation of the resistor 49 and ensure it is positively held in place.

Combinations of the retaining member 48 shown in Figures 13A and 15 and the input terminal 83 shown in Figures 19A and 19B, and combinations of the retaining member 48 shown in Figures 16A to 18, 21A to 23, and 28 to 30 and the input terminals 81 and 82 shown in Figures 11A to 12B may also be used to achieve the same function and effects.

Reference has been made above to a construction in which a hollow tubular connecting member 41 is provided on the outer end face of a case cap 6, input terminals 81, 82 and 83 are disposed inside the connecting member 41, and brushes 7 and 16 are electrically connected to the input terminals 81, 82 and 83 via other electrically conductive materials. This invention, however, can readily be applied to miniature motors having a construction in which an input terminal 8 is connected directly to a brush 7, as shown in Figure 1. In addition, although reference has also been made to an example where the retaining member 48 is substantially U-shaped, it may, for example, be formed into an L-shape or I-shape without a leg 55b.

The present invention offers the following particular benefits:
(1) The positive temperature coefficient resistor may be elastically held by the input terminal and the retaining member, and if an external pulling force is exerted on the resistor, the extracting resistance is increased because the lanced and raised lug or the lanced and raised projection cuts into the surface of the electrode of the resistor.
(2) The pushing force exerted on the positive temperature coefficient resistor can be controlled over a wide range. Forming the retaining member from a thin sheet of material having a thickness of about 0.2 mm permits the resistor to be held securely without risking damage to its surface.
(3) The positive temperature coefficient resistor may be easily inserted between the input terminal and the retaining member as a slight gap is provided at the inserting location.
(4) The omission of the positive temperature coefficient resistor during assembly may be easily detected merely by checking the electrical continuity between the input terminal and the retaining member.

## Claims

1. A miniature motor having a metallic tubular case (1) closed at one end with a permanent magnet (2) fitted to the inner surface thereof; a case cap (6) closing the open end of the case (1); a rotor (5) comprising an armature (3) and a commutator (4), being rotatably supported by bearings (9,10) provided on the closed end of the case and on the case cap (6); brushes (7) supported on the case cap (6) for making sliding contact with the commutator (4); a pair of input terminals (81,82,83) electrically connected to the brushes (7), and a retaining member (48) for connecting a brush (7) to one of the input terminals (82,83) via a positive temperature coefficient resistor (49) held between the input terminal and the retaining member,
CHARACTERISED IN THAT
the retaining member (48) has a leg (55a) disposed in the case cap (6), the end of the leg (55a) comprising at least two prongs, with a projection (57) formed on one prong (56) by lancing and raising a portion thereof and a retaining piece (58) formed by plastically deforming a portion of another prong, both the projection and retaining piece being directed towards the input terminal (82,83) but without the retaining member (48) making any contact therewith, and being adapted to engage and hold a positive temperature coefficient resistor (49) thereagainst such that movement of a retained resistor (49) in the extracting direction is restricted by the projection (57) cutting into the surface of the resistor.

2. A miniature motor according to Claim 1 wherein a pushing piece (66,75) extends from the retaining member (48) in a direction opposite to the leg (55a), and is adapted to resiliently engage a retained resistor (49).

3. A miniature motor according to Claim 1 or Claim 2 wherein the retaining member (48) is substantially U-shaped.

4. A miniature motor according to any preceding Claim wherein a projection (54,64) is also provided on the input terminal (82,83) and is directed towards the retaining member (48).

5. A miniature motor according to Claim 4 wherein the input terminals (81,82) are substantially L-shaped and of which the shorter legs act as stoppers (51) against the inner end of the case cap (6) wherein a lanced and raised lug (52) is formed from an intermediate portion of each terminal (81,82) and is plastically deformed against an outer end surface of the case cap (6), and wherein the input terminal projection (54) is disposed between the stopper (51) and the lug (52) on one of the pair of terminals.

6. A miniature motor according to Claim 4 wherein each input terminal (83) has a substantially rectangular shape, with a wider section forming a stopper (51) relative to the case cap (6), and two lanced and raised lugs formed from intermediate portions thereof, of which one comprises the input terminal projection (64) and the other (52) engages the body of the case cap (6).

7. A miniature motor according to any preceding Claim wherein a projection (68) is provided on an inner wall of a hole (67) provided on the case cap (6) for receiving the positive temperature coefficient resistor (49), and contacts the resistor on the same side as the input terminal (82,83).

## Patentansprüche

1. Ein Miniaturmotor, der ein metallisches röhrenförmiges Gehäuse (1) aufweist, daß an einer Seite mit einem Permanentmagneten (2) verschlossen ist, der an dessen Innenfläche eingepaßt ist; eine Gehäusekappe (6), die die offene Seite des Gehäuses (1) abschließt; einen Rotor (5), der einen Anker (3) und einen Kommutator (4) aufweist, die drehbar durch Lager (9,10) gehaltert sind, welche an der geschlossenen Seite des Gehäuses und an der Gehäusekappe (6) vorgesehen sind; Bürsten (7), die an der Gehäusekappe (6) gehaltert sind, so daß sie in Schleifkontakt mit dem Kommutator (4) stehen; ein Paar Eingangsanschlußklemmen (81, 82, 83), die elektrisch mit den Bürsten (7) verbunden sind, und ein Befestigungselement (48), um eine Bürste (7) mit einer der Eingangsanschlußklemmen (82, 83) über einen Widerstand (49) mit positivem Temperaturkoeffizienten zu verbinden, der zwischen der Eingangsanschlußklemme und dem Befestigungselement gehalten wird,
**dadurch gekennzeichnet**,
daß das Befestigungselement (48) einen Schenkel (55a) aufweist, der in den Gehäusedeckel (6) eingefügt ist, wobei das Ende des Schenkels (55a) mindestens zwei Zinken aufweist, wobei an einem Zinken (56) ein Fortsatz (57) ausgeführt ist, indem ein Teil des Zinkens eingeschnitten und hochgebogen ist, und wobei ein Befestigungsteil (58) geformt ist, indem ein Teil eines anderen Zinkens plastisch verformt wurde, wobei sowohl der Fortsatz als auch das Befestigungsteil zu der Eingangsanschlußklemme (82, 83) gerichtet sind, aber ohne daß das Befestigungselement (48) Kontakt mit dieser hat, und wobei sie so angepaßt sind, daß sie einen Widerstand (49) mit positivem Temperaturkoeffizienten aufnehmen und gegen diese halten, so daß die Bewegung eines befestigten Widerstandes (49) in der Entnahmerichtung durch den Fortsatz (57) eingeschränkt ist, der in die Oberfläche des Widerstandes einschneidet.

2. Ein Miniaturmotor nach Anspruch 1, wobei sich von dem Befestigungselement (48) in entgegengesetzter Richtung zu dem Schenkel (55a) ein Andrückteil (66, 75) erstreckt und so angepaßt ist, daß es an einen befestigten Widerstand (49) federnd angreift.

3. Ein Miniaturmotor nach Anspruch 1 oder Anspruch 2, wobei das Befestigungselement (48) im wesentlichen U-förmig ist.

4. Ein Miniaturmotor nach einem der vorhergehenden Ansprüche, wobei auch an der Eingangsanschlußklemme (82, 83) ein Vorsprung (54, 64) vorgesehen ist und zu dem Befestigungselement (48) hin gerichtet ist.

5. Ein Miniaturmotor nach Anspruch 4, wobei die Eingangsanschlußklemmen (81, 82) im wesentlichen L-förmig sind und wobei bei diesen die kürzeren Glieder als Anschlag (51) gegen die Innenseite der Gehäusekappe (6) wirken, wobei ein eingeschnittener und hochgebogener Fortsatz (52) aus einem Mittelteil jeder Anschlußklemme (81, 82) geformt ist und plastisch gegen eine Außenfläche der Gehäusekappe (6) gebogen ist und wobei der Vorsprung (54) der Eingangsanschlußklemme an einer Anschlußklemme des Paares zwischen dem Anschlag (51) und dem Fortsatz (52) vorgesehen ist.

6. Ein Miniaturmotor nach Anspruch 4, wobei jede Eingangsanschlußklemme (83) eine im wesentlichen rechteckige Form aufweist, wobei ein breiterer Abschnitt einen Anschlag (51) gegen die Gehäusekappe (6) bildet, und wobei sie zwei eingeschnittene und hochgebogene Fortsätze aufweist, die im mittleren Abschnitt derselben ausgeführt sind, von denen einer den Vorsprung (64) der Eingangsanschlußklemme umfaßt und der andere (52) an den Körper der Gehäusekappe (6) angreift.

7. Ein Miniaturmotor nach einem der vorhergehenden Ansprüche, wobei ein Vorsprung (68) an einer Innenwand eines Loches (67) vorgesehen ist, das in der Gehäusekappe (6) vorgesehen ist, um den Widerstand (49) mit positivem Temperaturkoeffizienten aufzunehmen, und wobei dieser den Widerstand an derselben Seite wie die Eingangsanschlußklemme (82, 83) berührt.

## Revendications

1. Moteur miniature comportant un carter tubulaire métallique (1) fermé à une extrémité avec un aimant permanent (2) emboîté sur sa surface intérieure ; un capuchon de carter (6) fermant l'extrémité ouverte du carter (1); un rotor (5) comprenant une armature (3) et un commutateur (4), étant supporté en rotation par des paliers (9, 10) prévus sur l'extrémité fermée du carter et sur le capuchon de carter (6); des balais (7) supportés sur le capuchon de carter (6) pour effectuer un contact coulissant avec le commutateur (4) ; une paire de bornes d'entrée (81, 82, 83) électriquement connectées aux balais (7), et un élément de retenue (48) pour connecter un balai (7) à l'une des bornes d'entrée (82, 83) via une résistance à coefficient de température positif (49) tenue entre la borne d'entrée et l'élément de retenue,
caractérisé en ce que :
l'élément de retenue (48) comporte un bras (55a) disposé dans le capuchon de carter (6), l'extrémité du bras (55a) comprenant au moins deux dents, avec une projection (57) formée sur l'une des dents (56) par soyage et par relèvement d'une partie de celle-ci, et une pièce de retenue (58) formée en déformant plastiquement une partie d'une autre dent, la projection et la pièce de retenue étant toutes deux dirigées vers la borne d'entrée (82, 83) mais sans que l'élément de retenue (48) n'assure aucun contact avec celle-ci, et étant adaptées à engager et à tenir une résistance à coefficient de température positif (49) contre celle-ci, de sorte qu'un mouvement d'une résistance retenue (49) dans la direction d'extraction est restreinte par la projection (57) par découpe dans la surface de la résistance.

2. Moteur miniature selon la revendication 1, dans lequel une pièce de poussée (66, 75) s'étend depuis l'élément de retenue (48) dans une direction opposée au bras (55a), et est adapté à engager de façon élastique une résistance retenue (49).

3. Moteur miniature selon l'une ou l'autre des revendications 1 et 2, dans lequel l'élément de retenue (48) a sensiblement la forme d'un U.

4. Moteur miniature selon l'une quelconque des revendications précédentes, dans lequel une projection (54, 75) est également prévue sur la borne d'entrée (82, 83) et est dirigée vers l'élément de retenue (48).

5. Moteur miniature selon la revendication 4, dans lequel les bornes d'entrée (81, 82) sont sensiblement en forme de L, dont les bras courts font office d'arrêts (51) contre l'extrémité intérieure du capuchon de carter (6), dans lequel une patte soyée et relevée (52) est formée depuis une partie intermédiaire de chaque borne (81, 82) et est plastiquement déformée contre une surface terminale extérieure du capuchon de carter (6), et dans lequel la projection de borne d'entrée (54) est disposée entre l'arrêt (51) et la patte (52) sur l'une des bornes de la paire de bornes.

6. Moteur miniature selon la revendication 4, dans laquelle chaque borne d'entrée (83) a une forme sensiblement rectangulaire, avec un tronçon plus large formant un arrêt (51) par rapport au capuchon de carter (6) et deux pattes soyées et relevées formées depuis des parties intermédiaires de celui-ci, l'une des pattes comprenant la projection de borne d'entrée (64) et l'autre (52) engageant le corps du capuchon de carter (6).

7. Moteur miniature selon l'une quelconque des revendications précédentes, dans lequel une projection (68) est prévue sur une paroi intérieure d'un perçage (67) prévu sur le capuchon de carter (6) pour recevoir la résistance à coefficient de température positif (49), et vient en contact avec la résistance sur le même côté que la borne d'entrée (82, 83).
